# EUROPEAN PATENT SPECIFICATION

(11) **EP 3 389 124 B1**
(45) Date of publication and mention of the grant of the patent: **13.03.2019**
(21) Application number: 18151314.4
(22) Date of filing: 12.01.2018
(51) Int. Cl.: H01M 6/40, A41D 13/005, A61F 7/00, H01M 10/62, H01M 10/613, H01M 10/659

(54) **HEATABLE GARMENT**
BEHEIZBARES KLEIDUNGSSTÜCK
VÊTEMENT CHAUFFANT

(30) Priority: 12.04.2017 TW 106112274; 13.06.2017 TW 106119625
(43) Date of publication of application: 17.10.2018
(73) Proprietor: Carmming International, New Taipei City (TW)
(72) Inventor: CHUNG, Kuo-Hua, Shulin Dist., New Taipei City (TW)
(74) Representative: 2K Patentanwälte Blasberg Kewitz & Reichel

(56) References cited:
- US-A- 5 643 480
- US-A1- 2005 096 574
- US-A1- 2010 057 168
- US-A1- 2011 130 813

## Description

### BACKGROUND OF THE INVENTION

### Field of the Invention

The present invention relates to a heating structure used with a wear device, such as a glove, a sock, and a scarf and in particular to a heatable wear device. Such devices are e.g. known from US 2005/096574 A1, US 5 643 480 A, US 2011/130813 A1 and US 2010/057168 A1.

### Description of Prior Art

To withstand the cold climate like cold stream or snow, there are wear devices, such as gloves, socks, scarfs, hoods, respirators, and earmuffs equipped with the heating structure available in the market, which provide the heat sources to keep the user warm. The heating structure is usually formed by the lithium-ion battery or solid state battery and the heating plate connected electrically to each other. The lithium-ion battery or solid state battery provides power for the heating plate to generate heat.

However, the lithium-ion battery or solid state battery cannot be disposed near the heating plate during the assembly process because of the issues of manufacturing and material of the lithium-ion battery or solid state battery. Therefore, the lithium-ion battery or solid state battery has to be kept a safe distance away or isolated from the heating plate such that the lithium-ion battery or solid state battery can be protected properly. Consequently, the above-mentioned disposition results in the problems of excessive assembled space, complicated assembly steps, and diffused heat sources.

In view of this, the problem the invention wants to solve is to pay special attention to research with the application of related theory and try to improve and overcome the above disadvantages regarding the above related art, which becomes the improvement target of the invention.

### SUMMARY OF THE INVENTION

The abovementioned problem is solved by the features of claim 1. Advantageous embodiments are subject of the dependent claims.

The present invention provides a heatable wear device which uses a closer assembly between the explosion-proof battery and the heating layer, the covering layer with a high specific heat of the explosion-proof battery as a heat reservoir to absorb the heat radiated from the filament. As a result, the heatable wear device has the advantages of a compact assembly space, simpler assembly steps, reduced power consumption, energy saving, and a concentrated heat source.

In the current embodiment, the present invention provides a heatable wear device which comprises a wear body, at least one heating module, and a circuit board. The at least one heating module is installed inside the wear body. The at least one heating module comprises an explosion-proof battery, which is a Solid State Battery (SSB) in which SSB, the flexible printed circuit, is used as the battery substrate and the packaging material, together with the SSB as the chemical system, a heating layer electrically connected to the explosion-proof battery and disposed corresponding to the explosion-proof battery, wherein the heating layer is woven from meal wires made of iron, steel, or copper, and a covering layer with a high specific heat, wherein the covering layer with the high specific heat is made of ceramic yarn or nylon yarn. The covering layer with a high specific heat is clamped between the explosion-proof battery and the heating layer and comprises a first surface and a second surface opposite to the first surface. The first surface is attached to the explosion-proof battery and the second surface is attached to the heating layer. The circuit board is installed inside the wear body and electrically connected to the explosion-proof battery.

Based on the above description, the radiation heat stored in the covering layer with a high specific heat can maintain the existing temperature to increase the operation time of the explosion-proof battery under the same capacity and to reduce the volume of energy storage such that the heatable wear device of the present invention can achieve the effects of reduced power consumption and energy saving.

### BRIEF DESCRIPTION OF DRAWING

FIG. 1 shows an operational view of the heatable wear device according to the first embodiment of the present invention;
FIG. 2 shows a cross-sectional schematic view the heating module according to the first embodiment of the present invention;
FIG. 3 shows an operational view of the heatable wear device according to the second embodiment of the present invention;
FIG. 4 shows an operational view of the heatable wear device according to the third embodiment of the present invention;
FIG. 5 shows an operational view of the heating module according to the second embodiment of the present invention;
FIG. 6 shows an operational view of the heating module according to the third embodiment of the present invention; and
FIG. 7 shows an operational view of the heatable wear device according to the fourth embodiment of the present invention.

### DETAILED DESCRIPTION OF THE INVENTION

The detailed description and technical details of the present invention will be explained below with reference to accompanying drawings. However, the accompanying figures are only for reference and explanation, but not to limit the scope of the present invention.

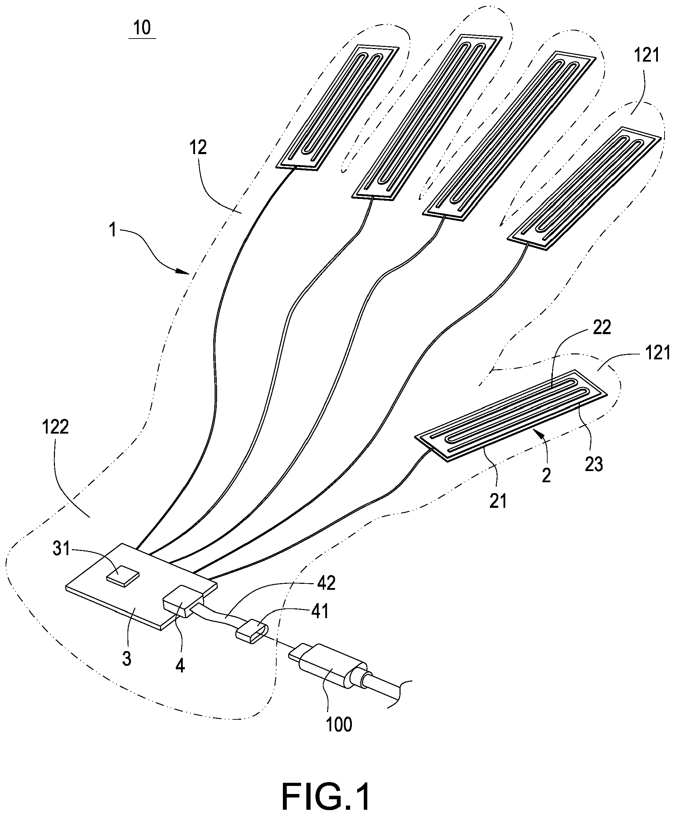

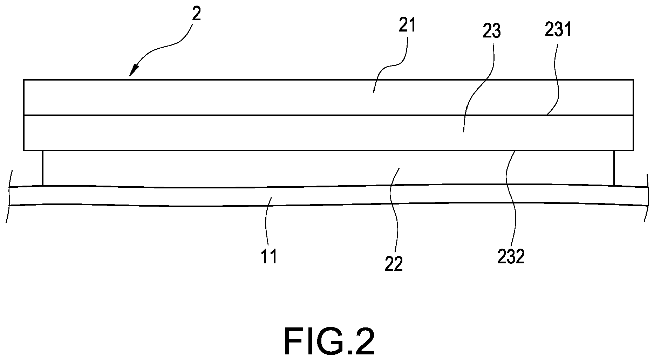

Please refer to FIGS. 1 and 2, which show the heatable wear device according to the first embodiment of the present invention. The heatable wear device 10 mainly comprises a wear body 1, at least one heating module 2, and a circuit board 3.

The wear body 1 may be a glove, a sock, a vest, or a scarf; that is, an article worn on a person. The details are given below. The wear body 1 has a lining 11. In the current embodiment, the wear body 1 is a glove 12 which comprises five finger portions 121 and a wrist portion 122. The lining 11 is formed on the inner surfaces of the respective finger portions 121.

In the current embodiment, the number of the heating modules 2 is five, but not limited to this. The five heating modules 2 are installed inside the wear body 1. In particular, each of the five heating modules 2 is installed inside the respective finger portions 121.

Each heating module 2 comprises an explosion-proof battery 21, a heating layer 22, and a covering layer 23 with a high specific heat. The heating layer 22 is electrically connected to the explosion-proof battery 21 and is disposed corresponding to the explosion-proof battery 21 and is attached to the lining 11. The covering layer 23 with a high specific heat is clamped between the explosion-proof battery 21 and the heating layer 22. The covering layer 23 with the high specific comprises a first surface 231 and a second surface 232 opposite to the first surface 231. The first surface 231 is attached to the explosion-proof battery 21 and the second surface 232 is attached to the heating layer 22.

Besides, the explosion-proof battery 21 is a Solid State Battery (SSB) in which SSB, the flexible printed circuit, is used as the battery substrate and the packaging material, together with the SSB as the chemical system. In this way, the SSB has an extreme thickness ranging from 0.32 mm to 0.36 mm and can be bent with a radius of curvature ranging from 15 mm to 17 mm. When an SSB is bent, it remains the same electric properties as a flat (unbent) SSB and does not form wrinkles. Also, the SSB still has high safety even when it suffers the physical impact of bending, hammering, or cutting, undergoes the harsh temperature test, such as the oven test at 200 °C for 10 minutes, the hot plate test at 250 °C, or the high-temperature test of the flame gun at 700 °C-1000 °C, or other destructive testing of electrical properties. Consequently, the accident of fire, explosion, burning, and leakage can be avoided.

Moreover, the heating layer 22 is woven from metal wires made of, not limited to, iron, steel, or copper, or formed by the polyimide film heating pad or by the PTC (positive temperature coefficient) ceramic heating element. The covering layer 23 with the high specific heat is made of ceramic yarn or nylon yarn. The specific heat of the ceramic yarn is about 840 J/(Kg·K) and the specific heat of the nylon yarn is about 1700 J/(Kg·K) such that when the ceramic yarn and the nylon yarn are heated to a high temperature, they will emit radiation heat.

The circuit board 3 is installed inside the wear body 1 and is electrically connected to the explosion-proof battery 21. The controller 31 is installed on the circuit board 3; the controller 31 controls electrical conduction and electrical insulation between the explosion-proof battery 21 and the heating layer 22 through the circuit board 3. In the current embodiment, the circuit board 3 is installed inside the wrist portion 122.

The heatable wear device 10 of the present invention further comprises a USB connector 4 which is installed on the circuit board 3; the USB connector 4 has a USB female connector 41 and an extension cord 42. A terminal end of the extension cord 42 is connected to the USB female connector 41. The USB connector 4 is connected to an external charging connector 100 such that the external power supply can charge the explosion-proof battery 21.

The assembly of the heatable wear device 10 of the present invention is described below. The heating module 2 is installed inside the wear body 1. The heating layer 22 is electrically connected to the explosion-proof battery 21 and is disposed corresponding to the explosion-proof battery 21. The covering layer 23 with a high specific heat is clamped between the explosion-proof battery 21 and the heating layer 22. The covering layer 23 with the high specific comprises the first surface 231 and the second surface 232 opposite to the first surface 231. The first surface 231 is attached to the explosion-proof battery 21 and the second surface 232 is attached to the heating layer 22. The circuit board 3 is installed inside the wear body 1 and is electrically connected to the explosion-proof battery 21.

The operation of the heatable wear device 10 of the present invention used the following features. The explosion-proof battery 21 can be assembled closer to the heat layer 22; the covering layer 23 with a high specific heat of the explosion-proof battery 21 can be used as a heat reservoir to absorb the heat radiated from the filament. Therefore, the heatable wear device 10 has the advantages of a compact assembly space, simpler assembly steps, reduced power consumption, energy saving, and concentrated heat sources.

In addition, as soon as the circuit is actuated, the explosion-proof battery 21 conducts electricity to the metal heating layer 22 such that the heating layer 22 heats the lining 11 directly and heats the covering layer 23 with a high specific heat at the same time.

Then, when the circuit has been actuated for a while, the covering layer 23 with a high specific heat is heated to a high temperature and emits the radiation heat which heats the lining 11 again. As a result, the temperature of the lining 11 increases further.

Finally, when the temperature of the lining 11 increases again, the controller 31 controls the electrical insulation between the explosion-proof battery 21 and the heating layer 22 through the circuit board 3 to stop the heating of the heating layer 22. At this moment, the radiation heat stored in the covering layer 23 with a high specific heat is used to maintain the existing temperature to increase the operation time of the explosion-proof battery 21 under the same capacity and to reduce the volume of energy storage such that the heatable wear device 10 of the present invention can achieve the effects of reduced power consumption and energy saving.

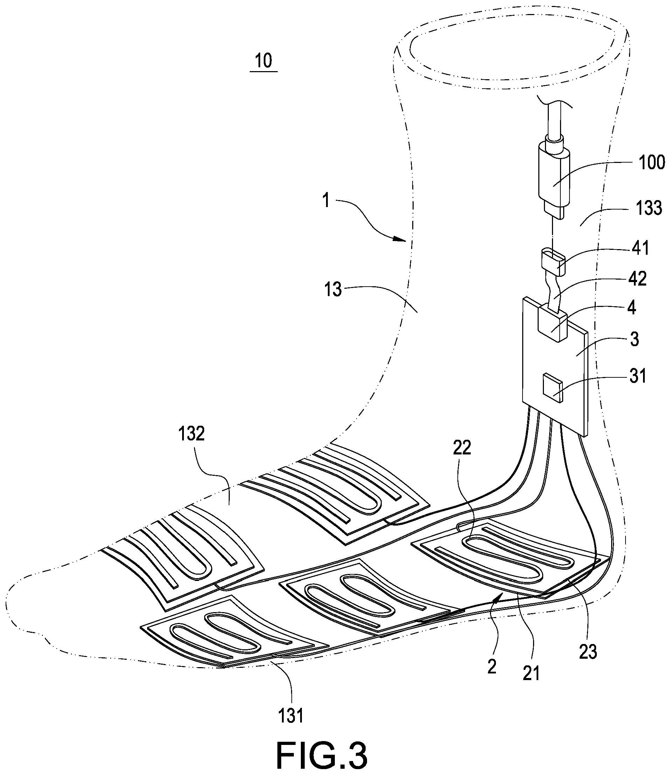

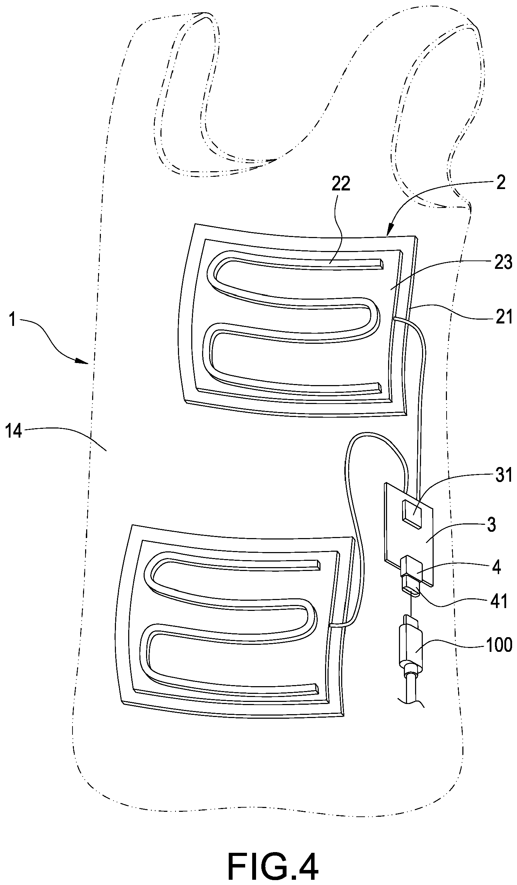

Please refer to FIGS. 3 and 4, which are the operational views of the heatable wear device 10 according to the second and the third embodiments of the present invention, respectively. The embodiments in FIGS. 3 and 4 are roughly similar to those in FIGS. 1 and 2. The differences between the embodiments in FIGS. 3 and 4 and in FIGS. 1 and 2 are that the wear body 1 may be a sock 13 or a vest 14, but not limited to these. The wear body 1 may be an article worn on a person, for example, a glove or a scarf.

The detailed description is given below. As shown in FIG. 3, the wear body 1 is a sock 13 which comprises a sole portion 131, an instep portion 132, and an ankle portion 133. The at least one heating module 2 is plural in number. Some of the heating modules 2 are installed inside the sole portion 131 and the others are installed inside the instep portion 132. The circuit board 3 is installed inside the ankle portion 133; the lining 11 is formed on the inner surfaces of the sole portion 131 and the instep portion 132.

As shown in FIG. 4, the wear body 1 is a vest 14. The heating modules 2 and the circuit board 3 are installed inside the vest 4; the lining 11 is formed on the inner surface of the vest 14.

Besides, as shown in FIG. 4, the USB connector 4 in the current embodiment has only one USB female connector 41. However, as shown in FIGS. 1 and 2, the USB connector 4 further comprises an extension cord 42; the terminal end of the extension cord 42 is connected to the USB female connector 41. The extension cord 42 and the USB connector 4 both have the function of auxiliary charging, but the former provides greater convenience of power charging.

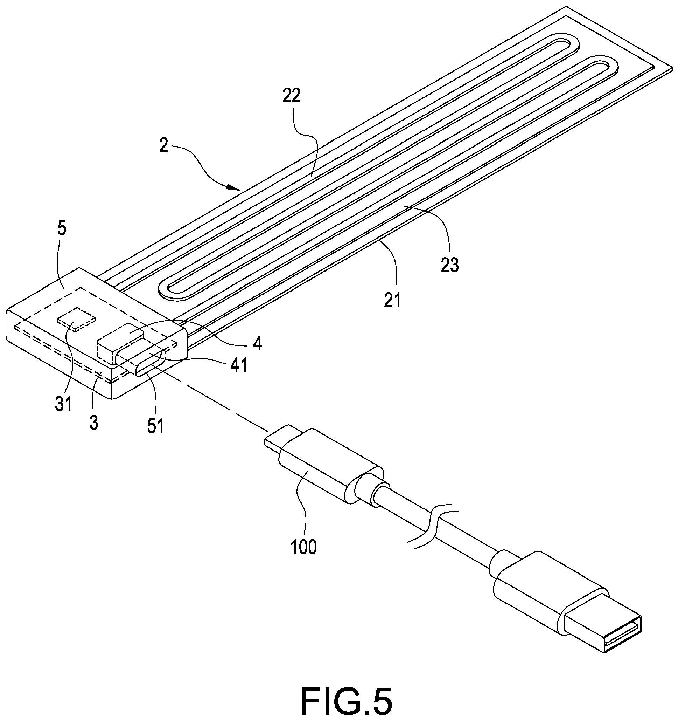

Please refer to FIGS. 5-7, which are the operational views of the heating module according to the second and the third embodiments of the present invention, and the operational view of the heatable wear device 10 according to the fourth embodiment of the present invention. The embodiments in FIGS. 5-7 are roughly similar to those in FIGS. 1 and 2. The differences between the embodiments in FIGS. 5-7 and in FIGS. 1 and 2 are that the heatable wear device 10 further comprises a fixed case 5.

The further description is given below. As shown in FIGS. 5-7, the at least one heating module 2 is single in number. The heating module 2 is attached to one side of the fixed case 5. The circuit board 3 is received inside the fixed case 5 which is provided with an opening 51 exposing the USB female connector 41. In this way, the fixed case 5 is used to protect the circuit board 3 and the USB connector 4.

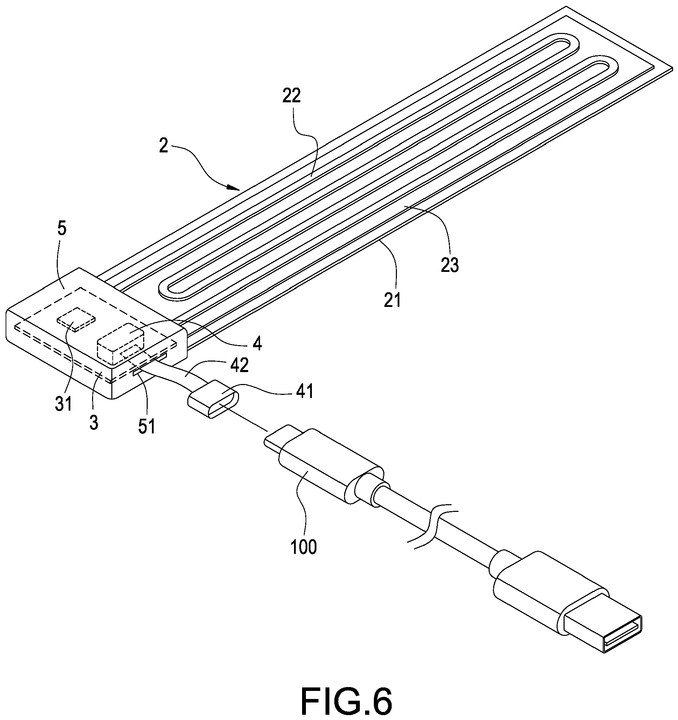

Besides, as shown in FIG. 5, the USB connector 4 in the current embodiment has only one USB female connector 41. However, as shown in FIG. 6, the USB connector 4 further comprises an extension cord 42; the terminal end of the extension cord 42 is connected to the USB female connector 41. The extension cord 42 and the USB connector 4 both have the function of auxiliary charging, but the former provides greater convenience of power charging.

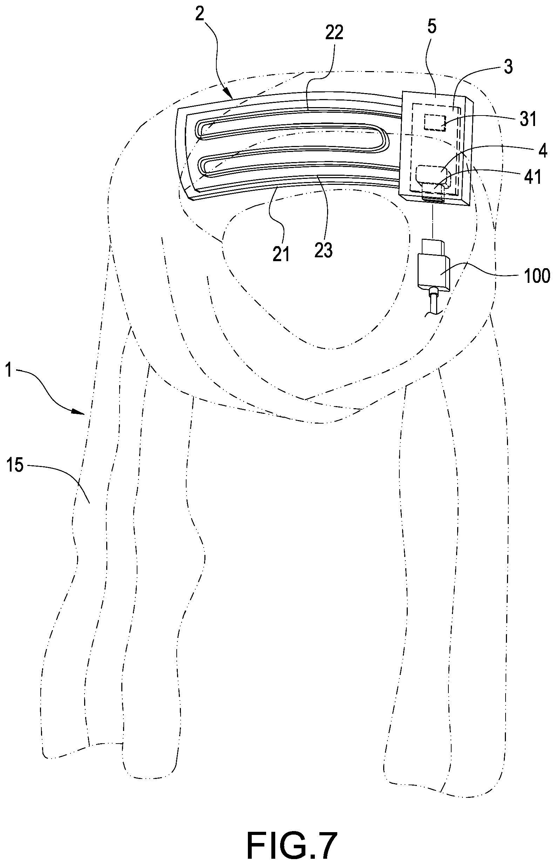

Moreover, as shown in FIG. 7, the wear body 1 in the current embodiment is a scarf 15. The at least one heating module 2, the circuit board 3, and the fixed case 5 are installed inside the scarf 15. The lining 11 is formed on the inner surface of the scarf 15. The wear body 1, not limited to the scarf 15, may be an article worn on a person like a glove.

## Claims

1. A heatable wear device (10), comprising:
a wear body (1);
at least one heating module (2) installed inside the wear body (1), wherein the at least one heating module (2) comprises:
a battery (21);
a heating layer (22) electrically connected to the battery (21) and disposed corresponding to the battery (21), wherein the heating layer (22) is woven from metal wires made of iron, steel, or copper; **characterized in that**
the battery is an explosion-proof battery, which is a Solid State Battery (SSB) in which SSB, the flexible printed circuit, is used as the battery substrate and the packaging material, together with the SSB as the chemical system; and
the at least one heating module (2) further comprises a covering layer (23) with a high specific heat clamped between the explosion-proof battery (21) and the heating layer (22), wherein the covering layer (23) with the high specific heat comprises a first surface (231) and a second surface (232) opposite to the first surface (231), wherein the first surface (231) is attached to the explosion-proof battery (21) and the second surface (232) is attached to the heating layer (22), wherein the covering layer (23) with the high specific heat is made of ceramic yarn or nylon yarn; and
a circuit board (3) installed inside the wear body (1) and electrically connected to the explosion-proof battery (21).

2. The heatable wear device (10) according to claim 1, wherein the wear body (1) has a lining (11) to which the heating layer (22) is attached.

3. The heatable wear device (10) according to claim 2, wherein a controller (31) is installed on the circuit board (3), wherein the controller (31) controls electrical conduction and electrical insulation between the explosion-proof battery (21) and the heating layer (22) through the circuit board (3).

4. The heatable wear device (10) according to claim 3, wherein the wear body (1) is a glove comprising five finger portions (121) and a wrist portion (122), wherein the number of the at least one heating module (2) is five, each installed inside the respective finger portions (121), wherein the circuit board (3) is installed inside the wrist portion (122), wherein the lining (11) is formed on the inner surfaces of the respective finger portions (121).

5. The heatable wear device (10) according to claim 3, wherein the wear body (1) is a sock (13) comprising a sole portion (131), an instep portion (132), and an ankle portion (133), wherein the at least one heating module (2) is plural in number, wherein some of the heating modules (2) are installed inside the sole portion (131) and the others are installed inside the instep portion (132), wherein the circuit board (3) is installed inside the ankle portion (133), wherein the lining (11) is formed on the inner surfaces of the sole portion (131) and the instep portion (132).

6. The heatable wear device (10) according to claim 3, wherein the wear body (1) is a vest (14), wherein the at least one heating module (2) and the circuit board (3) are installed inside the vest (14), wherein the lining (11) is formed on the inner surface of the vest (14).

7. The heatable wear device (10) according to claim 3, wherein the wear body (1) is a scarf (15), wherein the at least one heating module (2) and the circuit board (3) are installed inside the scarf (15), wherein the lining (11) is formed on the inner surface of the scarf (15).

8. The heatable wear device (10) according to claim 1, further comprising a USB connector (4) installed on the circuit board (3), wherein the USB connector (4) has a USB female connector (41).

9. The heatable wear device (10) according to claim 8, wherein the USB connector (4) further comprises an extension cord (42), wherein a terminal end of the extension cord (42) is connected to the USB female connector (41).

10. The heatable wear device (10) according to claim 1, further comprising a USB connector (4) and a fixed case (5), wherein the USB connector (4) is installed on the circuit board (3), wherein the USB connector (4) has a USB female connector (41), wherein the fixed case (5) is installed inside the wear body (1), wherein the at least one heating module (2) is single in number, wherein the heating module (2) is attached to one side of the fixed case (5), wherein the circuit board (3) is received inside the fixed case (5) which is provided with an opening (51) exposing the USB female connector (41).

11. The heatable wear device (10) according to claim 10, wherein the USB connector (4) further comprises an extension cord (42), wherein part of the extension cord (42) is exposed out of the opening (51) of the USB female connector (41), wherein a terminal end of the extension cord (42) is connected to the USB female connector (41).

## Patentansprüche

1. Beheizbares Kleidungsstück (10), umfassend:
einen Kleidungskörper (1);
mindestens ein Heizmodul (2), das innerhalb des Kleidungskörpers (1) installiert ist, wobei das mindestens eine Heizmodul (2) umfasst:
eine Batterie (21);
eine mit der Batterie (21) elektrisch verbundene und entsprechend der Batterie (21) angeordnete Heizschicht (22), wobei die Heizschicht (22) aus Metalldrähten aus Eisen, Stahl oder Kupfer gewebt ist; **dadurch gekennzeichnet, dass**
die Batterie eine explosionsgeschützte Batterie ist, die eine Solid State Battery (SSB) ist, bei der SSB, die flexible gedruckte Schaltung, als Batteriesubstrat und Verpackungsmaterial zusammen mit der SSB als chemisches System verwendet wird; und
das mindestens eine Heizmodul (2) ferner eine Deckschicht (23) mit einer hohen spezifischen Wärme umfasst, die zwischen der explosionsgeschützten Batterie (21) und der Heizschicht (22) eingespannt ist, wobei die Deckschicht (23) mit der hohen spezifischen Wärme eine erste Oberfläche (231) und eine zweite Oberfläche (232) gegenüber der ersten Oberfläche (23I) umfasst, wobei die erste Oberfläche (231) an der explosionsgeschützten Batterie (21) und die zweite Oberfläche (232) an der Heizschicht (22) befestigt ist, wobei die Deckschicht (23) mit der hohen spezifischen Wärme aus Keramik- oder Nylongarn besteht; und
eine Leiterplatte (3), die innerhalb des Kleidungskörpers (1) installiert und elektrisch mit der explosionsgeschützten Batterie (21) verbunden ist.

2. Beheizbares Kleidungsstück (10) nach Anspruch 1, wobei der Kleidungskörper (1) eine Auskleidung (11) aufweist, an der die Heizschicht (22) befestigt ist.

3. Beheizbares Kleidungsstück (10) nach Anspruch 2, wobei eine Steuerung (31) auf der Leiterplatte (3) installiert ist, wobei die Steuerung (31) die elektrische Leitung und elektrische Isolierung zwischen der explosionsgeschützten Batterie (21) und der Heizschicht (22) durch die Leiterplatte (3) steuert.

4. Beheizbares Kleidungsstück (10) nach Anspruch 3, wobei der Kleidungskörper (1) ein Handschuh ist, der fünf Fingerabschnitte (121) und einen Handgelenkabschnitt (122) umfasst, wobei die Anzahl der mindestens einen Heizmodule (2) fünf beträgt, die jeweils innerhalb der jeweiligen Fingerabschnitte (121) installiert sind, wobei die Leiterplatte (3) innerhalb des Handgelenkabschnitts (122) installiert ist, wobei die Auskleidung (11) an den Innenflächen der jeweiligen Fingerabschnitte (121) ausgebildet ist.

5. Beheizbares Kleidungsstück (10) nach Anspruch 3, wobei der Kleidungskörper (1) eine Socke (13) ist, die einen Sohlenabschnitt (131), einen Spannabschnitt (132) und einen Knöchelabschnitt (133) umfasst, wobei das mindestens eine Heizmodul (2) mehrfach vorhanden ist, wobei einige der Heizmodule (2) innerhalb des Sohlenabschnitts (131) und die anderen innerhalb des Spannabschnitts (132) installiert sind, wobei die Leiterplatte (3) innerhalb des Knöchelabschnitts (133) installiert ist, wobei die Auskleidung (11) an den Innenflächen des Sohlenabschnitts (131) und des Spannabschnitts (132) ausgebildet ist.

6. Beheizbares Kleidungsstück (10) nach Anspruch 3, wobei der Kleidungskörper (1) eine Weste (14) ist, wobei das mindestens eine Heizmodul (2) und die Leiterplatte (3) innerhalb der Weste (14) installiert sind, wobei die Auskleidung (11) an der Innenfläche der Weste (14) ausgebildet ist.

7. Beheizbares Kleidungsstück (10) nach Anspruch 3, wobei der Kleidungskörper (1) ein Schal (15) ist, wobei das mindestens eine Heizmodul (2) und die Leiterplatte (3) innerhalb des Schals (15) installiert sind, wobei die Auskleidung (11) an der Innenfläche des Schals (15) ausgebildet ist.

8. Beheizbares Kleidungsstück (10) nach Anspruch 1, ferner umfassend einen auf der Leiterplatte (3) installierten USB-Anschluss (4), wobei der USB-Anschluss (4) eine USB-Buchse (41) aufweist.

9. Beheizbares Kleidungsstück (10) nach Anspruch 8, wobei der USB-Anschluss (4) ferner ein Verlängerungskabel (42) umfasst, wobei ein Anschlussende des Verlängerungskabels (42) mit der USB-Buchse (41) verbunden ist.

10. Beheizbares Kleidungsstück (10) nach Anspruch 1, ferner umfassend einen USB-Stecker (4) und ein festes Gehäuse (5), wobei der USB-Stecker (4) auf der Leiterplatte (3) installiert ist, wobei der USB-Stecker (4) eine USB-Buchse (41) aufweist, wobei das feste Gehäuse (5) innerhalb des Kleidungskörpers (1) installiert ist, wobei das mindestens eine Heizmodul (2) einfach vorhanden ist, wobei das Heizmodul (2) an einer Seite des festen Gehäuses (5) befestigt ist, wobei die Leiterplatte (3) innerhalb des festen Gehäuses (5) aufgenommen ist, das mit einer Öffnung (51) versehen ist, die die USB-Buchse (41) freigibt.

11. Beheizbares Kleidungsstück (10) nach Anspruch 10, wobei der USB-Stecker (4) ferner ein Verlängerungskabel (42) umfasst, wobei ein Teil des Verlängerungskabels (42) aus der Öffnung (51) des USB-Steckverbinders (41) heraus freiliegt, wobei ein Anschlussende des Verlängerungskabels (42) mit dem USB-Steckverbinder (41) verbunden ist.

## Revendications

1. Un dispositif de vêtement chauffant (10), comprenant:
un corps de vêtement (1);
au moins un module de chauffage (2) installé à l'intérieur du corps de vêtement (1), dans lequel ledit module de chauffage au moins (2) comporte :
une batterie (21);
une couche chauffante (22) connectée électriquement à la batterie (21) et disposée en correspondance avec la batterie (21), dans lequel la couche chauffante (22) est tissée de conducteurs métalliques réalisés en fer, acier ou cuivre ; **caractérisé en ce que**
la batterie est une batterie antidéflagrante, qui est une batterie à semiconducteur (SSB), dans laquelle SSB, le circuit imprimé flexible, est utilisé comme substrat de batterie et le matériau d'emballage ensemble avec le SSB en tant que système chimique ; et
le ou les module(s) de chauffage (2) comporte(nt) en outre une couche de couverture (23) à chaleur spécifique élevée bloquée entre la batterie antidéflagrante (21) et la couche chauffante (22), dans lequel la couche de couverture (23) à chaleur spécifique élevée comporte une première surface (231) et une seconde surface (232) opposée à la première surface (231), dans lequel la première surface (231) est fixée à la batterie antidéflagrante (21) et la seconde surface (232) est fixée à la couche chauffante (22); dans lequel la couche de couverture (23) à chaleur spécifique élevée est fabriquée à partir de fil de céramique ou de fil de nylon ; et
une carte de circuit imprimé (3) installée à l'intérieur du corps de vêtement (1) et connectée électriquement à la batterie antidéflagrante (21).

2. Le dispositif de vêtement chauffant (10) selon la revendication 1, dans lequel le corps de vêtement (1) comporte une doublure (11) à laquelle est fixée la couche chauffante (22).

3. Le dispositif de vêtement chauffant (10) selon la revendication 2, dans lequel un contrôleur (31) est Installé sur la carte de circuit imprimé (3), dans lequel le contrôleur (31) contrôle la conduction électrique et l'isolation électrique entre la batterie antidéflagrante (21) et la couche chauffante (22) à travers la carte de circuit imprimé (3).

4. Le dispositif de vêtement chauffant (10) selon la revendication 3, dans lequel le corps de vêtement (1) est un gant comprenant cinq parties de doigt (121) et une partie de poignet (122), dans lequel le nombre de module(s) chauffant(s) (2) est égal à cinq, chaque module chauffant étant installé à l'intérieur des parties de doigt respectives (121), dans lequel la carte de circuit imprimé (3) est installée à l'intérieur de la partie de poignet (122), dans lequel la doublure (11) est formée sur les surfaces internes des parties de doigt respectives (121)).

5. Le dispositif de vêtement chauffant (10) selon la revendication 3, dans lequel le corps de vêtement (1) est une chaussette (13) comprenant une partie de semelle (131), une partie de pied (132) et une partie de cheville (133), dans laquelle le ou les module(s) chauffant(s) (2) sont au nombre de plusieurs, dans lequel certains des modules chauffants (2) sont installés à l'intérieur de la partie de semelle (131) et les autres sont installés à l'intérieur de la partie de pied (132), dans lequel la carte de circuit imprimé (3)) est installée à l'intérieur de la partie de cheville (133), dans lequel la doublure (11) est formée sur les surfaces internes de la partie de semelle (131) et de la partie de pied (132).

6. Le dispositif de vêtement chauffant (10) selon la revendication 3, dans lequel le corps de vêtement (1) est un gilet (14), dans lequel le ou les module(s) chauffant(s) (2) ainsi que la carte de circuit imprimé (3) sont installés à l'intérieur du gilet (14), dans lequel la doublure (11) est formée sur la surface intérieure du gilet (14).

7. Le dispositif de vêtement chauffant (10) selon la revendication 3, dans lequel le corps de vêtement (1) est un foulard (15), dans lequel le ou les module(s) chauffant(s) (2) ainsi que la carte de circuit imprimé (3) sont installés à l'intérieur du foulard (15), dans lequel la doublure (11) est formée sur la surface intérieure du foulard (15).

8. Le dispositif de vêtement chauffant (10) selon la revendication 1, comprenant en outre un connecteur USB (4) installé sur la carte de circuit imprimé (3), dans lequel le connecteur USB (4) a un connecteur USB femelle (41).

9. Le dispositif de vêtement chauffant (10) selon la revendication 8, dans lequel le connecteur USB (4) comprend en outre une rallonge (42), une extrémité de la rallonge (42) étant reliée au connecteur USB femelle (41).

10. Le dispositif de vêtement chauffant (10) selon la revendication 1, comprenant en outre un connecteur USB (4) et un boîtier fixe (5), dans lequel le connecteur USB (4) est installé sur la carte de circuit imprimé (3), dans lequel le connecteur USB (4) présente un connecteur femelle USB (41), dans lequel le bottier fixe (5) est installé à l'intérieur du corps de vêtement (1), dans lequel le module de chauffage (2) est unique, dans lequel le module de chauffage (2) est fixé sur un côté du boîtier fixe (5), dans lequel le circuit imprimé (3) est logé à l'intérieur du boîtier fixe (5) qui est muni d'une ouverture (51) exposant le connecteur femelle USB (41).

11. Le dispositif de vêtement chauffant (10) selon la revendication 10, dans lequel le connecteur USB (4) comprend en outre une rallonge (42), dans lequel une partie de la rallonge (42) est exposée à l'extérieur de l'ouverture (51) du connecteur USB femelle (41), dans lequel une extrémité de la rallonge (42) est connectée au connecteur USB femelle (41).
